(19) Europäisches Patentamt / European Patent Office / Office européen des brevets

(11) **EP 4 300 459 A1**

(12) **EUROPEAN PATENT APPLICATION**

(43) Date of publication:
03.01.2024  Bulletin 2024/01

(21) Application number: 23181342.9

(22) Date of filing: 26.06.2023

(51) International Patent Classification (IPC):
**G08G 1/01** (2006.01)    **G08G 1/16** (2006.01)

(52) Cooperative Patent Classification (CPC):
**G08G 1/0116; G08G 1/0133; G08G 1/0141; G08G 1/0145; G08G 1/164; G08G 1/166**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.06.2022  GB 202209599

(71) Applicant: CANON KABUSHIKI KAISHA
Tokyo 146-8501 (JP)

(72) Inventors:
• MORVAN, Isabelle
  35135 CHANTEPIE (FR)
• LE HOUEROU, Brice
  35690 ACIGNE (FR)
• NASSOR, Eric
  35235 THORIGNE-FOUILLARD (FR)
• RUELLAN, Hervé
  35700 RENNES (FR)

(74) Representative: Santarelli
Tour Trinity
1 bis Esplanade de la Défense
92035 Paris La Défense Cedex (FR)

(54) **IMPROVED COMMUNICATIONS WITHIN AN INTELLIGENT TRANSPORT SYSTEM TO ANTICIPATE THE BEHAVIOR OF MOBILE OBJECTS**

(57)    According to some embodiments of the disclosure, it is provided a method of communication in an intelligent transport system, ITS, comprising, at an originating ITS station, ITS-S, monitoring an area, transmitting a Collective Perception Message, CPM, comprising predicted data representing a predicted behavior of an object perceived by the originating ITS-S within the monitored area, the CPM further comprising an item of information characterizing the predicted behavior with regard to at least one element of the monitored area.

Fig. 5

EP 4 300 459 A1

**Description**

FIELD OF THE DISCLOSURE

The present disclosure relates generally to Intelligent Transport Systems (ITS) and more specifically to Cooperative Intelligent Transport Systems (C-ITS).

BACKGROUND OF THE DISCLOSURE

Cooperative Intelligent Transport Systems (C-ITS) is an emerging technology for future transportation management that aims at improving road safety, traffic efficiency, and driver experience.

Intelligent Transport Systems (ITS), as defined by the European Telecommunications Standards Institute (ETSI), include various types of communication such as:

- communications between vehicles (e.g., car-to-car), and
- communications between vehicles and stationary stations (e.g., car-to-infrastructure).

C-ITSs are not restricted to road transport as such. More generally, C-ITS may be defined as the use of information and communication technologies (ICT) for rail, water and air transport, including navigation systems. Such various types of C-ITS generally rely on radio services for communication and use dedicated technologies.

Such C-ITSs are subject to standards, specified for each country and/or territory where C-ITSs are implemented. Today, in Europe, the European Telecommunications Standards Institute is in charge of the elaboration of the specifications forming the standards to which C-ITSs are subjected.

Cooperation within C-ITSs is achieved by exchange of messages, referred as to ITS messages, between ITS stations (denoted ITS-Ss). The ITS-Ss may be vehicles, Road Side Units (RSUs), Vulnerable Road Users (VRUs) carrying an ITS equipment (for instance included in a smartphone, a GPS device, a smart watch, or in a cyclist equipment), or any other entities or infrastructure equipped with an ITS equipment, as well as central subsystems (back-end systems and traffic management centers).

As observed above, C-ITSs may support various types of communications, for instance between vehicles (vehicle-to-vehicle or "V2V"), referring to all kinds of road users, e.g., car-to-car, or between vehicles and stationary stations such as vehicle-to-infrastructure or "V2I", and infrastructure-to-vehicle or "I2V", e.g., car-to-infrastructure.

Such exchanges of messages may be performed via a wireless network, referred to as "V2X" (for "vehicle" to any kind of devices) networks, examples of which may include 3GPP LTE- Advanced Pro, 3GPP 5G, or IEEE 802.11p technology (3GPP, LTE, and IEEE are Registered Trade Marks).

Exemplary ITS messages include Collective Perception Messages (CPMs), Cooperative Awareness Messages (CAMs), and Decentralized Environmental Notification Messages (DENMs). An ITS-S sending an ITS message is named an "originating" ITS-S and an ITS-S receiving an ITS message is named a "receiving" ITS-S.

It is recalled here that ETSI TS 103 324 (V0.0.29 of May 2022) standard defines the Collective Perception Service, that may be used by an ITS-S having an on-board sensor system to detect objects in its vicinity and to transmit, using broadcast CPMs, description information (e.g., its dynamics such as a position and/or kinematic information) thereof. The CPMs are generally periodically sent with a period varying from 100 milliseconds to one second depending, for example, on the speed of the objects sensed by the originating ITS-S.

It is also to be noted that the EN 302 637-2 (V1.4.1 of April 2019) standard defines the Cooperative Awareness Basic Service, that may be used by an ITS-S to transmit, using broadcast CAMs, its ego-vehicle dynamics (e.g., its position and speed).

It is also to be noted that the EN 302 637-3 (V1.3.1 of April 2019) standard defines the Decentralized Environmental Notification Basic Service, that may be used by an originating ITS-S to send, using broadcast DENMs, notifications to other ITS-Ss, such as warnings or alerts. Such a message notifies of an event (e.g., a road hazard, driving environment information, traffic condition information, etc.) detected by the originating ITS-S.

As mentioned above, the Collective Perception Service allows a sensor-equipped ITS station to share, on a periodic basis, its perceived objects (e.g., vehicles or pedestrians) with other nearby ITS stations to improve their local environment perception using broadcast Collective Perception Messages (CPMs). The receiving ITS stations can then update their local environment model (LEM) with objects perceived by other ITS stations, and perform an association process with the data obtained from their on-board sensors to improve the reliability of the local environment model data. It is observed that CPMs complying with a first CPM version mainly contain information about the current state of the objects (e.g a current position, a current speed, an object classification, etc.) while CPMs complying with a second CPM version may include "predictions" related information to include potential future states of objects.

While exchanging items of information regarding the objects perceived by each ITS stations enables an overall improvement in safety of the ITS users, it should be kept in mind that exchanging data between ITS stations is resource intensive (e.g., bandwidth, processing, etc.) and that only truly useful data should be transmitted. Therefore, there is a constant need to improve the selection of transmitted data to increase the overall safety of the system.

## SUMMARY OF THE INVENTION

The present invention has been devised to address one or more of the foregoing concerns.

According to a first aspect of the disclosure, there is provided a method of communication in an intelligent transport system, ITS, comprising, at an originating ITS station, ITS-S, monitoring an area:

transmitting a Collective Perception Message, CPM, comprising predicted data representing a predicted behavior of an object perceived by the originating ITS-S within the monitored area, the CPM further comprising an item of information characterizing the predicted behavior with regard to at least one element of the monitored area.

Accordingly, the method of the disclosure makes it possible to transmit predicted data and associated context information enabling a receiving ITS station to process efficiently received predicted data and thus, to optimize use of resources in an ITS.

According to some embodiments, the at least one element is different from the perceived object.

According to some embodiments, the predicted behavior comprises a predicted position or a predicted trajectory including a set of consecutive predicted positions.

Still according to some embodiments, the item of information characterizing the predicted behavior comprises a danger level associated with an occurrence of the predicted behavior, a difficulty level representing a difficulty for predicting the behavior of the perceived object, and/or an indication of an existing or a predicted situation causing a possible occurrence of the predicted behavior.

Still according to some embodiments, the method further comprises determining the predicted behavior. Determining the predicted behavior comprises accessing knowledge associated with elements of the area, the knowledge associated with elements of the area being, for example, observed past trajectories, vehicle timetables, school timetables, and/or local events.

Still according to some embodiments, the method further comprises determining a state of the perceived object, wherein determining the predicted behavior is carried out as a function of the state of the perceived object, the item of information characterizing the predicted behavior comprising an indication of the state of the perceived object.

Still according to some embodiments, the method further comprises determining an attitude of the perceived object, wherein determining the predicted behavior is carried out as a function of the attitude of the perceived object, the item of information characterizing the predicted behavior comprising an indication of the attitude of the perceived object.

According to a second aspect of the disclosure, there is provided a method of communication in an intelligent transport system, ITS, comprising, at a receiving ITS station, ITS-S:

receiving a Collective Perception Message, CPM, from an originating ITS-S, the received CPM comprising predicted data representing a predicted behavior of an object perceived by the originating ITS-S within a monitored area, the CPM further comprising an item of information characterizing the predicted behavior with regard to at least one element of the monitored area, and

analyzing the received predicted behavior and the item of information characterizing the received predicted behavior to determine whether the received predicted behavior is to be considered.

Accordingly, the method of the disclosure makes it possible to receive predicted data and associated context information enabling the receiving ITS station to process efficiently the received predicted data and thus, to optimize use of resources in an ITS.

According to some embodiments, the at least one element is different from the perceived object.

Still according to some embodiments, the method further comprises determining a predicted behavior of the perceived object, the determined predicted behavior or the received predicted behavior being considered as a result of the analyzing.

Still according to some embodiments, the item of information characterizing the predicted behavior comprises a danger level associated with an occurrence of the predicted behavior, a difficulty level representing a difficulty for predicting the behavior of the perceived object, an indication of an existing or a predicted situation causing a possible occurrence of the predicted behavior, and/or a state or an attitude of the perceived object.

This aspect of the disclosure has advantages similar to those mentioned above.

According to other aspects of the disclosure, there is provided a device configured for carrying out each of the steps of the method described above and a non-transitory computer-readable medium storing a program which, when executed by a microprocessor or computer system in an Intelligent Transport System station, ITS-S, causes the ITS-S to perform each step of the method described above.

These aspects of the disclosure have advantages similar to those mentioned above.

At least parts of the methods according to the disclosure may be computer implemented. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present disclosure may take the form of a computer program product embodied in any tangible medium of expression having computer usable program code embodied in the medium.

Since the solutions of the present disclosure can be implemented in software, the solutions of the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g., a microwave or RF signal.

BRIEF DESCRIPTION OF THE DRAWINGS

Further advantages of the present invention will become apparent to those skilled in the art upon examination of the drawings and detailed description. Embodiments of the invention will now be described, by way of example only, and with reference to the following drawings, in which:

**Figure 1** illustrates an example of an ITS in which some embodiments of the present disclosure may be implemented;
**Figure 2** illustrates an example of a road side unit embedding an ITS station, in which some embodiments of the present disclosure may be implemented;
**Figure 3** illustrates an example of steps of a method in an originating ITS-S for sending CPMs containing perceived objects with prediction information, according to some embodiments of the present disclosure;
**Figure 4** illustrates an example of steps of a method in a receiving ITS-S for receiving CPMs containing perceived objects with prediction information, according to some embodiments of the present disclosure;
**Figure 5** illustrates an example of a structure of a collective perception message, CPM, according to some embodiments of the present disclosure;
**Figure 6** illustrates an example of a service specific permission (SSP) item which may be specified in a certificate of a CPM according to some embodiments of the present disclosure;
**Figure 7** illustrates an intelligent transportation system (ITS) where a dangerous trajectory is predicted for a motorbike on the roadway monitored by the ITS implementing an embodiment of the disclosure; and
**Figure 8** is a schematic representation of an example of a communication ITS-S device configured to implement some embodiments of the present disclosure, in whole or in part.

DETAILED DESCRIPTION OF THE DISCLOSURE

It is noted that the names of the lists and elements (such as data elements) provided in the following description are only illustrative. Embodiments are not limited thereto and other names could be used.

The embodiments of the present disclosure are intended to be implemented in Intelligent Transportation Systems (ITSs).

There exist ITS stations provided with some behavior analysis or trajectory prediction functions that enable prediction of future states of objects belonging to their local dynamic map. The results of the behavior analysis may lead to predicted trajectories that can be used to improve the decision-making of a traffic participant, e.g., to reduce a risk of collision or to select trajectories reducing a risk of congestion. This results in a higher level of traffic safety and/or in optimized traffic flow (reducing the level of emissions).

Since not all the ITS stations are equipped with the same processing capabilities, not all the ITS stations can obtain prediction by themselves. Accordingly, prediction related information, for example predicted behaviour such as predicted paths of perceived objects, may be exchanged between ITS stations within Collective Perception Message (CPM). However, adding predicted paths to all perceived objects by all ITS stations in messages that are exchanged between the ITS stations would increase the bandwidth used by the Collective Perception Service.

The inventors have observed that transmitting predicted paths without additional items of information may lead to wasting resources with data that are useless (e.g., predicted paths that are already known by a receiving ITS-S using its own prediction algorithm) or that are actually not usable (e.g., predicted paths for which a receiving ITS-S cannot determine a confidence level).

Accordingly, prediction information should be included in CPMs with other items of information to be useful to a receiving ITS-S, such other items of information being directed, for example, to specific knowledge of the originating ITS-S. For the sake of illustration, such originating ITS stations that should share their predictions with other ITS stations can be ITS stations that have specific knowledge of the considered local area (e.g., knowledge about bus timetables, about presence of temporary construction sites, about trajectories learnt over time, etc.) that other ITS station entering into this area do not have. This is typically the case for a roadside ITS station connected to an infrastructure that can provide local-area knowledge. Still for the sake of illustration, originating ITS stations that should share their predictions with other ITS stations can be ITS stations provided with on-board sensors comprising behavior analysis (e.g., on-board sensors or resources making it possible to detect the head and body orientation of a pedestrian, to detect the rising hand of a cyclist, etc., that is useful to predict that a human may cross the road or that a cyclist may turn).

According to some embodiments of the disclosure, a dangerousness value is associated with a predicted behavior so that a receiving ITS-S station may decide how to process the received predicted behavior. For the sake of illustration, a predicted behavior with a low probability of occurrence that is associated with a high dangerousness value should be handled more rigorously than a predicted behavior with a low probability of occurrence that is associated with a low dangerousness value. Therefore, an information item representing the predicted path dangerousness is preferably transmitted along with the corresponding predicted path so that receiving ITS station can analyze the trade-off between the predicted path probability and its dangerousness. In addition or in a variant, an information item representing the difficulty to determine a predicted behaviour such as a predicted path without having specific knowledge or specific behavior analysis capability is added to the transmitted message comprising the predicted data so that a receiving ITS station may analyze the trade-off between the predicted data probability and the difficulty to obtain such prediction.

Still according to some embodiments of the disclosure, an indication of a criterion (or reason) used by an originating ITS station to decide whether to share predicted data with other ITS stations (by transmitting these predicted data into a CPM) is transmitted along with the predicted data. By receiving the criterion or reason with a predicted behavior (e.g., a predicted path), the receiving ITS station can increase its level of trust in the plausibility of the prediction.

Still according to some embodiments of the disclosure, a predicted situation type is transmitted along with predicted data to ease the analysis of the latter. Such a predicted situation type (e.g., a human crossing a road, a vehicle slowing down, a vehicle stopping, etc.) may be detected by the originating ITS station transmitting the predicted data when analyzing a behavior and/or predicting a trajectory.

Therefore, a CPM, i.e. a message regularly transmitted by an originating ITS station to share objects, free spaces, or space states perceived by its local sensors, comprises predicted data concerning perceived objects and additional items of information associated with the predicted data. Examples of such additional items of information are a level of dangerousness associated with a predicted path, a reason why the originating ITS station has included predicted information, and/or a type of situation associated with predicted information (examples of such situation type being a human crossing the road, a cyclist turning, a vehicle slowing down, an obstacle bypassing, etc.).

A receiving ITS-S may use such additional items of information contained in a CPM and related to predicted data also contained in the CPM to determine the confidence it may have in the received predicted data before using them to update its local environment model. Accordingly, it can perform a quicker analysis of the prediction impact using the dangerousness or the situation type information.

*ITS system and ITS station comprising a situation analysis module*

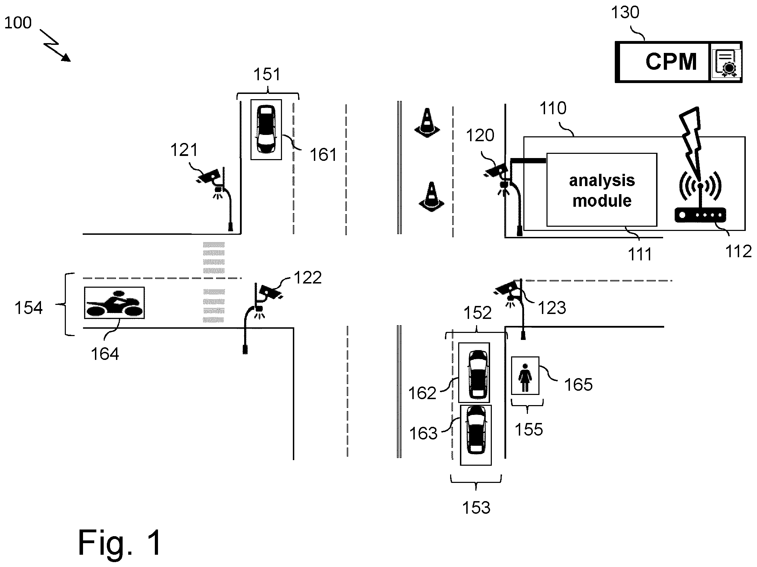

**Figure 1** illustrates an example of an ITS 100 in which some embodiments of the present disclosure may be implemented.

According to this example, an ITS station, that may generate and transmit CPMs such as CPM 130, is embedded within a road side unit, RSU, 110. It is observed that RSUs have generally more processing resources to analyze behavior and predict trajectories than ITS-Ss embedded within moving vehicles. For example, an RSU may have a wider field of view than an ITS-S embedded within a vehicle, multiple fields of view, fast access to other information such as traffic conditions, traffic light status, knowledge of objects that populate the monitored area, etc.

In particular, a wide view of the area monitored by an RSU allows the RSU to learn and to analyze the trajectories of vehicles, motorbikes, cyclists, or pedestrians. The RSU may also have access to local peculiarities such as timetables of bus, school, presence of a temporary construction site, etc.

As illustrated, ITS 100 is implemented at an intersection and comprises stationary road side unit 110 and several entities that may carry or embed an ITS station (ITS-S) each, for transmitting and/or receiving ITS messages within the ITS. The several entities may be for example, vehicles 151, 152, 153, a motorbike 154, and a pedestrian 155.

Stationary road side unit 110 includes a set of sensors, such as image sensors, here video cameras 120, 121, 122, and 123 and an analytical module to analyze data provided by the sensors, such as analysis module (or situation analysis module) 111. Each of the video cameras 120, 121, 122, and 123 is configured to monitor or scan a portion of the area monitored by the RSU (here the road intersection), making it possible to acquire images and/or videos of the monitored area. Other sensors such as LIDARs (laser imaging detection and ranging devices) may also be used.

The sensors are connected to the analysis module (e.g., video cameras 120, 121, 122, and 123 are connected to analysis module 111) so that the analysis module may process the stream captured by the sensors/video cameras to analyze the traffic and to predict future states of the traffic participants. The analysis module and the sensors may be separated from or embedded within the same physical road side unit. For example, the analysis module may be wire-connected to sensors that may be remote sensors (i.e. not embedded within the road side unit).

The processing of the data received from the sensors by the analysis module, e.g., analysis module 111, aims at detecting objects potentially present in the monitored area, referred to as "perceived objects" or "detected objects" hereinafter. Mechanisms to detect such objects are well known by one skilled in the art.

The situation analysis module is also configured to output a list of the perceived objects respectively associated with corresponding description information referred to as "state vector". The state vector for a perceived object may include for instance parameters such as a position, a kinematic, temporal information, behavioral or object type classification information, etc.

Therefore, the situation analysis module may identify, among the perceived objects, Vulnerable Road Users (VRUs) such as pedestrians and cyclists as well as motorcyclists and also persons with disabilities or reduced mobility and orientation. It may also identify objects such as trees, road construction/work equipment (e.g., road barriers), and so on.

A VRU may be considered as an ITS-S when carrying an ITS equipment, for example an ITS equipment included in a smartphone, a satnav system, a smart watch, or in a cyclist equipment.

According to the example illustrated in Figure 1, analysis module 111 may perceive the following objects when analyzing images of the monitored area:

- objects 161, 162, and 163, respectively corresponding to vehicles 151, 152, and 153,
- object 164 corresponding to motorbike 154 on the roadway, and
- object 165 corresponding to pedestrian 155 on the sidewalk.

In addition, the perceived objects may be classified. For example, if the perceived objects are ITS stations, they can be classified as vehicles, VRUs, RSUs, or any another ITS-S types. Such object type classification may be based for example on predetermined rules, provided during the setting up of road side unit 110, or more generally the ITS-S. It is observed that ETSI TR 103 562 V2.1.1 defines for instance the categories "unknown", "vehicle", "person", "animal", and "other". Of course, other categories, more specific, may be defined.

According to some embodiments, the analysis module comprises behavior analysis and trajectory prediction functions to analyze the trajectories and the behavior of the perceived objects, to predict their future trajectories.

The analysis module may also have access to some information about the monitored area, e.g., about the road intersection geometry, about bus timetables, about school timetables, etc., that can be used to analyze the monitored area, enabling, for example, to predict that a bus will stop or turn on this road, that pedestrians will cross the road to go to a school entrance, etc.

As illustrated in Figure 1, road side unit 110 further comprises a road side ITS-S, R-ITS-S, 112, for example as specified in the reference architecture of an ITS station defined in version V1.1.1 of the ETSI EN 302 665 specification.

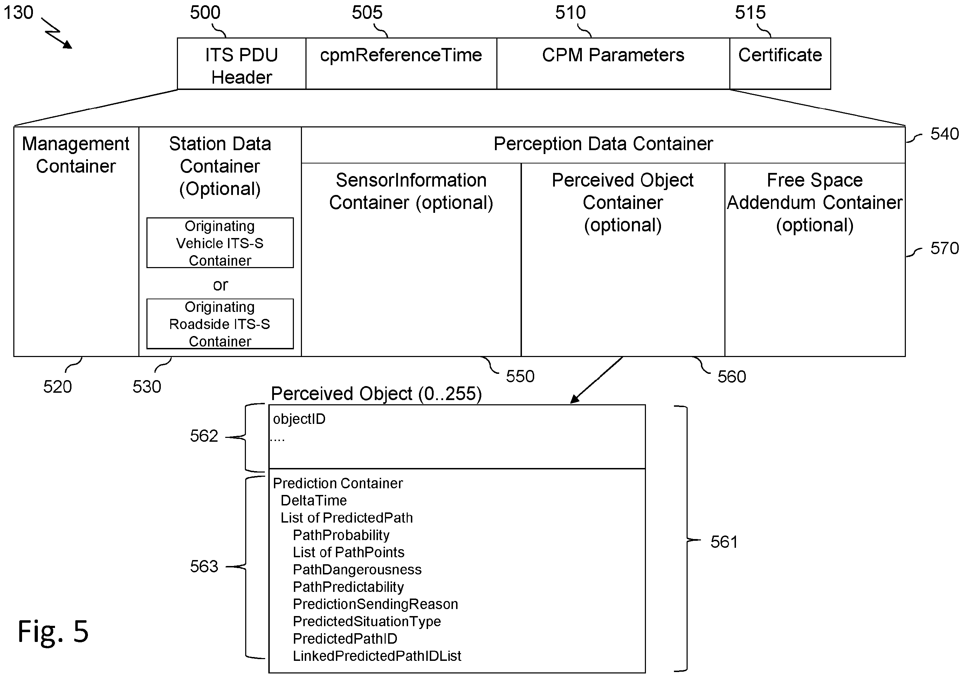

Thanks to roadside ITS-S 112, RSU 110 can share information relative to the perceived objects. Typically, RSU 110 can share such information with receiving ITS stations by sending ITS messages, particularly the so-called Collective Perception Messages, CPMs, e.g., CPM 130, for example as defined in documents ETSI TR 103 562 and ETSI TS 103 324, that are generally sent periodically. An example of the format of a CPM according to some embodiments of the present disclosure is illustrated in Figure 5.

More generally, any ITS-S in ITS 100 may share information on the objects it perceives, by sending CPMs, as well as information on itself, by sending so-called Cooperative Awareness Messages, CAMs, for example as defined in document ETSI EN 302 637-2. CAMs may include a position, a kinematic (or dynamics), a unique station identifier, temporal information, behavioral or object type classification information, etc. Similarly, VRU Awareness Messages, VAMs, for example as defined in document ETSI TS 103 300-3, can be sent by VRU ITS-S to share their own position and kinematic or to share information corresponding to a group of VRUs (i.e., a VRU cluster).

The ITS messages are usually broadcast by their originating ITS-S, so that any other ITS-S can receive and exploit them.

All the messages exchanged over ITS 100 may help each ITS-S to have a good level of knowledge of its environment in terms of which objects are present, where and how they behave.

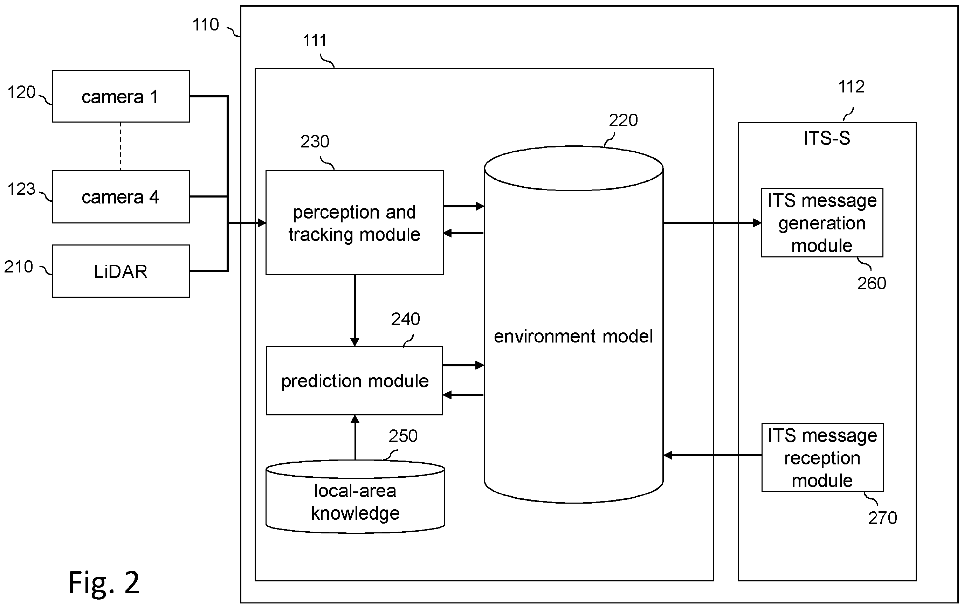

**Figure 2** illustrates an example of a road side unit embedding an ITS station, in which some embodiments of the present disclosure may be implemented.

For the sake of illustration, it is considered here that the illustrated road side unit is the RSU referenced 110 in Figure 1. However, it may be another type of ITS-S-equipped entity.

As mentioned above by reference to Figure 1, analysis module 111 is connected to one or more sensors monitoring an area such as a road intersection. These sensors may include cameras 120 to 123 but also other sensors such as LIDAR 210 or mere radar devices.

The raw data acquired from these sensors may be processed by the perception and tracking module 230 of analysis module 111. According to some embodiments, the perception and tracking module 230 analyzes these raw data and uses sensor data fusion algorithms to combine or merge items of information directed to the same objects detected from the raw data acquired by several sensors.

Consideration of similarity between objects detected from raw data acquired from different sensors may be based on their object types, positions, kinetics/dynamics (speed, acceleration), trajectories, etc. A level of confidence may also be computed when scrutinizing the similarities of these items of information and the merging process may be affected by the level of confidence.

Items of information related to newly perceived objects and/or to already-tracked objects may be used to update the environment model 220 of the ITS-S. CAMs, VAMs, DENMs, and CPMs received from other ITS-Ss by the ITS message reception module 270 of ITS-S 112, conveying additional information, may also be used to update environment model 220.

The environment model (also known as the Local Dynamic Map) contains a list of the perceived objects. Each ITS-S has its own environment model 220.

In environment model 220, an object may be defined together with multiple items of information including, for example, all or some of the following:

- *objectID,* which is the identifier of the perceived (or detected) object,
- *timeOfMeasurement*, which represents the moment when the (last) measurement concerning the perceived object was made,
- *Distance,* which is the distance between the perceived object and the originating ITS-S. It may be determined according to a frame of reference fixed to the originating ITS-S (e.g., RSU 110 in Figure 1). For the sake of illustration, the distance may be determined relatively to three directions *x, y, z* of the frame of reference, such that the distance is indicated within three fields *xDistance, yDistance, zDistance,* which represent together the distance between the perceived object and the originating ITS station's reference point at the time of measurement, with a corresponding level of confidence,
- *Speed,* which is the speed of the perceived object with respect to the originating ITS station's reference point at the time of measurement. For the sake of illustration, the speed may be determined relatively to three directions *x, y, z* of the frame of reference such that the speed is indicated within three fields *xSpeed, ySpeed, zSpeed,* representing together the speed of the detected object, with a corresponding level of confidence,
- *Acceleration* (optional), which is the acceleration of the perceived object with respect to the originating ITS station's reference point at the time of measurement. For the sake of illustration and similarly to the speed, the acceleration may be indicated within three fields *xAcceleration, yAcceleration, zAcceleration* relatively to the three directions of the frame of reference fixed to the originating ITS-S, with a corresponding level of confidence,
- *planarObjectDimension* (optional), which represents the dimensions of the perceived object. The dimension may be indicated within three fields *planarObjectDimension 1, planarObjectDimension2, verticalObjectDimension,*
- *objectRefPoint,* which is the reference point of the perceived object. By default, the reference point is the center point of the perceived object,
- *objectAge,* that is the age of the perceived object,
- *objectConfidence,* which represents a confidence level associated with the perceived object. The computation of the object confidence level is based on a sensor's or merging system confidence, the binary detection success (i.e. the detection success of the object during the last measurements), and the object age,
- *classification* (optional), which provides the classification of the perceived object, with a corresponding level of confidence,
- *sensorIDList* (optional), which is a list of the sensors used to detect the perceived object,
- *dynamicStatus* (optional), which provides the capability of the originating ITS-S to move away from the perceived object (e.g., dynamic, hasBeenDynamic, static), and
- *matchedPosition* (optional), which indicates the position of the perceived object mapped onto the intersection topology description transmitted in MAP messages.

According to the illustrated example, analysis module 111 further comprises the prediction module 240 that analyzes the behavior and the trajectory of the perceived objects to make predictions, for example to predict a behavior or a path. Predicted data may be added to environmental model 220. For the sake of illustration, environment model 220 may comprise the following predicted data:

- *predictionInformation* (optional), which represents prediction information related to a perceived object. It may be determined by the prediction module 240 or it may be received from CPMs containing prediction information. The prediction information may comprise a set of predicted paths with a path probability of each path.

Additionally, the *prediction Information* may contain additional information item provided by the prediction module such as an identifier of a predicted path (e.g., *PredictedPathID*).

Still additionally, the *predictionInformation* may contain additional information item determined by the prediction module such as a list of linked predicted paths (e.g., *LinkedPredictedPathIDList).* An object predicted path can be associated with another object predicted path or several objects predicted paths to reflect the possible interactions between object predictions.

In addition, the *predictionInformation* may further comprise a dangerousness value, a predictability level, a reason for predicting a behavior, and/or a type of situation, as described hereafter. Such items of information may be stored in the environment model and/or transmitted to other ITS-Ss, to increase the quality of the prediction behavior.

*Dangerousness*

According to a particular embodiment, the prediction module (e.g., prediction module 240) may determine a dangerousness value associated with predicted data (e.g., a predicted behavior or a predicted path), in addition to a probability that an event leading to the predicted data occurs. Such a dangerousness value may be used by a receiving ITS station to determine how to process the corresponding predicted data. For the sake of illustration, a predicted path with a low probability, that is associated with a high dangerousness value, should be considered by a receiving ITS-S in such a way that appropriate mitigation actions are anticipated to avoid a dangerous situation in case this prediction becomes reality. If the predicted path has a low probability and is associated with a low dangerousness value, it may be ignored by the receiving ITS-S. According to this embodiment, the prediction module advantageously updates the environment model (e.g., environment model 220) with the determined dangerousness values. For example, the prediction module may update an information item denoted *PathDangerousness,* for each predicted path contained in an information item denoted *predictionInformation* of the environment model, where predicted data are stored. The level of dangerousness associated with a predicted path may also be included in a CPM.

This level can be expressed as a percentage value or a level value. The higher the value is, the higher the level of danger is. As for other data elements defined in ITS ASN.1, the 0 value may be used to indicate that the level is "unknown".

For the sake of illustration, the dangerousness level may be defined as follows using the ASN1 code:

```
PathDangerousness ::= INTEGER {
    unknown             (0),
    oneHundredPercent   (100),
    unavailable         (101)
} (0..101)
```

Thanks to the information about a path dangerousness, the other ITS-Ss receiving the CPM can anticipate a dangerous situation.

In addition or in a variant, the path dangerousness value may reflect a difficulty to predict a situation without having the local knowledge of the monitored area or without having any advanced prediction algorithm (e.g., pedestrian behavior analysis based on head / body orientation). This value is then used to balance the path probability value. An additional *PathPredictability* field may be used or the *PathDangerousness* field can be renamed *PathPredictability.* For the sake of illustration, the predictability level may be defined as follows using the ASN1 code:

```
PathPredictability ::= INTEGER {
    unknown             (0),
    oneHundredPercent   (100),
    unavailable         (101)
} (0..101)
```

By sending a path predictability level, the originating ITS-S can indicate to other ITS stations an added value of its prediction. The receiving ITS-Ss can then trust or not trust the prediction and can decide to use it or not to enrich their local environment model.

*Reasons for predicting data / transmitting predicted data*

Still according to a particular embodiment (that may be combined with the previous one), the prediction module (e.g., prediction module 240) may identify and signal items of information that led to predicted data, for example that led to a predicted behavior or to a predicted path. For the sake of illustration, the prediction module may determine predicted paths by analyzing past trajectories and the object dynamics. Still for the sake of illustration, the prediction module may use information obtained from local-area knowledge, for example from local-area knowledge database 250, to predict data. Such local-area knowledge may comprise learnt trajectories of the monitored areas, timetables of local events (e.g., bus timetables, school timetables, etc.), and/or local events (e.g., construction work, illegal parking area, etc.). Predicted data may also result from analyzing the behavior of perceived objects. For example, analyzing the head and body orientation of a pedestrian may lead to predicting an intention of the pedestrian to cross the road, with a certain level of confidence. Likewise, detecting a cyclist raising his left-hand may lead to predicting an intention of the cyclist to turn to the left. Still for the sake of illustration, analyzing the state of a vehicle (e.g., whether the doors are opening or closing) may lead to anticipating a passing cyclist's deviation. According to this embodiment, the prediction module advantageously updates the environment model (e.g., environment model 220) with an item of information directed to one or more reasons why data have been predicted or with an indication of the method used to predict data. For example, the prediction module may update an information item denoted *PredictionSendingReason,* for each predicted path contained in an information item denoted *predictionInformation* of the environment model, where predicted data are stored.

The reason why the originating ITS-S station adds a predicted path in a CPM, that may be denoted the Prediction Sending Reason, can be indicated in the CPM, in a *PredictionSendingReason* field associated with this predicted path. The Prediction Sending Reason can be indicated using a code. For example, it can be composed of a main category code and of a subcategory code such as described in the following table:

| main code | prediction sending reason category | sub-code | sub-category for the prediction sending reason |
|---|---|---|---|
| 0 | unknown | | |
| 1 | local knowledge | 0 | unknown |
| | | 1 | trajectory clusters |
| | | 2 | bus timetables |
| | | 3 | construction work |
| | | 4 | illegal parking area |
| | | 5 | school timetables |
| 2 | VRU attitude | 0 | unknown |
| | | 1 | pedestrian head / body attitude |
| | | 2 | bicyclist rising hand |
| | | 3 | unpredictable VRU (children, watching smartphone) |
| 3 | vehicle state | 0 | unknown |
| | | 1 | vehicle door opening |
| | | 2 | vehicle door closing |

Of course, other values may be contemplated.

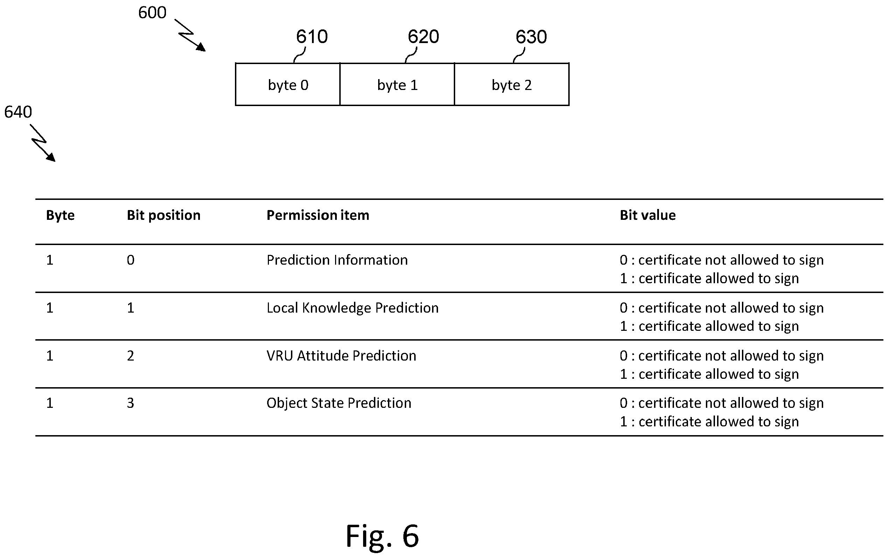

The supported type of sending a prediction reason can also be transmitted through Service Specific Permission field (SSP), as described by reference to Figure 6, of the originating ITS-S. For example, a vehicle might only have the prediction algorithm for the VRU attitude/pedestrian head/body attitude and/or a roadside unit might only have the prediction algorithm for the local trajectory clusters.

By sending prediction information, the originating ITS-S can indicate to other ITS stations an added value of its prediction. The receiving ITS-Ss can then trust or not trust the prediction and can decide to use it or not to enrich their local environment model.

*Predicted type of situations associated with predicted data*

Still according to a particular embodiment (that may be combined with the previous ones), the prediction module (e.g., prediction module 240) may indicate a type of a situation associated with predicted data, for example a type of a situation corresponding to a predicted behavior. For the sake of illustration, such a situation may be an obstacle avoidance, a slowdown of vehicles, a vehicle stopping, a pedestrian crossing the road, a cyclist turning, a vehicle starting, etc. Still for the sake of illustration, the prediction module may update an information item denoted *PredictedSituationType,* for each predicted path contained in an information item denoted *predictionInformation* of the environment model, where predicted data are stored, to indicate the corresponding type of situation.

The type of a predicted situation may also be indicated in a CPM, for example in a *PredictedSituationType* field associated with a predicted path. The predicted situation type can be indicated using a code such as the ones described in the following table:

| code | predicted situation type |
|------|--------------------------|
| 0 | unknown |
| 1 | dangerous behavior |
| 2 | slowing down |
| 3 | stopping |
| 4 | obstacle bypassing |
| 5 | pedestrian crossing the road |
| 6 | cyclist turning |
| 7 | unpredictable |
| 8 | obstacle removed |
| 9 | vehicle start |

Of course, other values may be contemplated. Several values may also be combined (e.g., dangerous behavior & cyclist turning).

The "unpredictable" code (used as a predicted situation type) may be used in case of objects whose behavior is difficult to predict, such as young children or a pedestrian looking at his or her smartphone while walking. If this code is used, then the predicted path might contain no path point. The use of the unpredictable code may alert other ITS-Ss that their prediction algorithms might not provide an accurate prediction due to the nature of the behavior or the type of the object.

Thanks to the predicted situation type, the originating ITS-S can indicate its analysis of the future situation to other ITS stations. Then, the receiving ITS-Ss can benefit from this analysis and quickly decide mitigation actions to limit dangerous situations or decide upon its next maneuver.

As apparent from Figure 2, environment model 220 is regularly updated by the perception and tracking module 230, the prediction module 240, and the ITS message reception module 270. In addition, analysis module 111 further comprises the ITS message generation module 260 that regularly generates CPMs containing the perceived object information with their prediction information.

*Transmitting CPMs with predicted information*

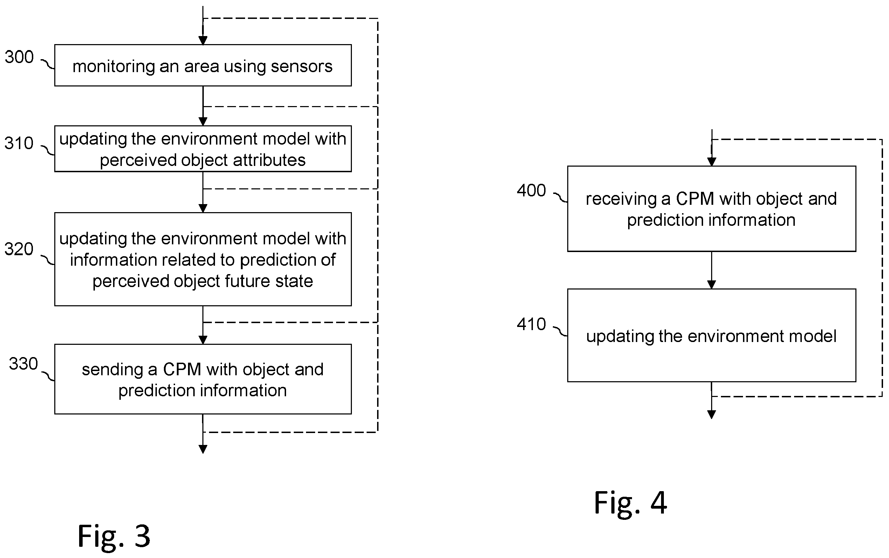

**Figures 3** illustrates an example of steps of a method in an originating ITS-S (e.g., RSU 110 of Figure 1) for sending CPMs containing perceived objects with predicted information, according to some embodiments of the present disclosure.

As illustrated, the method of communication in an ITS comprises monitoring an area (step 300) such as a road portion or a road intersection, as shown in Figure 1. To that end, the originating ITS-S uses its sensors (e.g., sensors 120-123 and 210 in Figure 2). Next, the originating ITS-S uses its perception and tracking module (e.g., perception and tracking module 230 in Figure 2) to identify objects in the monitored area and to update its environment model (e.g.,

environment model 220 in Figure 2) with information directed to the perceived objects (step 310). During this step or in another step (not represented), the environment model may be updated using items of information contained in ITS messages (CAMs, VAMs, CPMs, or DENMs) received from other ITS-Ss.

Next (or in parallel), the prediction module analyzes the objects described in the environment model (e.g., in environment model 220 in Figure 2), predicts their behavior, and updates the corresponding prediction information in the environment model (step 320).

According to a particular embodiment, when prediction information is added or updated in the environment model, the ITS-S, acting as an originating ITS-S, sends a CPM containing items of information directed to the perceived objects with which is associated the added or updated prediction information and to the associated prediction information (step 330), for example using the CPM format described by reference to Figure 5. The selection of the prediction information to include in the CPM to be transmitted may be done during this step. As described above, sending prediction information in CPMs should be useful for the receiving ITS-Ss. For example, if the receiving ITS-Ss are able to predict the path of an object by analyzing its path history with the receiving ITS-Ss own prediction algorithms, sending the predicted path has a limited interest and thus, it should be avoided (in order to save resources such as bandwidth). Accordingly, criteria for determining whether or not prediction information is to be transmitted within CPMs should be defined in order to optimize the use of bandwidth. For the sake of illustration, such a criteria may be based on an inclusion score.

Accordingly, the originating ITS-S may determine a prediction inclusion score for each prediction information item associated with a perceived objet. If the prediction inclusion score is greater than a given threshold (e.g., denoted *P_Threshold*), then the originating ITS-S includes the corresponding prediction information with items of information directed to the associated perceived object in a next generated CPM. According to some embodiments, the threshold value (*P_Threshold*) may be adjusted dynamically, for example as a function of the channel load (e.g., in case of channel congestion, the threshold value is decreased). For the sake of illustration, the prediction inclusion score can be computed using a combination of at least two of the following elements:

- the predicted path probability,
- the predicted path dangerousness,
- the path predictability,
- the prediction sending reason,
- the predicted situation type, and
- the elapsed time since the last transmission of prediction for a given perceived object.

When a predicted path becomes meaningless, it is possible to transmit it with a *PathProbability* set to 0 in order to indicate to the receiving ITS-Ss that the corresponding items of information are no more applicable.

As illustrated in Figure 3 with the dotted arrows, the illustrated steps are preferably continuously or periodically carried out.

**Figures 4** illustrates an example of steps of a method in a receiving ITS-S for receiving CPMs containing perceived objects with prediction information, according to some embodiments of the present disclosure.

As illustrated, after having received a CPM comprising items of information associating objects with prediction information (step 400), a receiving ITS-S, that can be for example a vehicle or a pedestrian, may use the received CPM to update its local environment model. Next, the receiving ITS-S updates its environment model with the perceived object information and the associated prediction information (step 410). As disclosed above, some items of information associated with predicted data make it possible to increase the level of understanding and the level of trust for a receiving ITS-S. For instance, if a predicted path has a low path probability, without additional explanation (i.e. without items of information associated with the predicted path), the receiving ITS-S may discard this prediction while this predicted path could help to anticipate a future dangerous situation. Using items of information characterizing the predicted path dangerousness or the predicted situation type, the receiving ITS-S may anticipate its reaction to a future dangerous situation. Likewise, using items of information characterizing the reasons why an originating ITS-S sent predicted data, the receiving ITS-S can trust or double-check the prediction prior to integrate it in its environment model (this can be carried out for example, at step 410). For instance, a receiving ITS-S may determine that for the same object, its local prediction is quite different from the prediction received through a CPM. By analyzing the prediction sending reason (e.g., the presence of roadwork), the receiving ITS-S can then increase its level of trust in the received prediction compared to its own local prediction.

As illustrated in Figure 4 with the dotted arrow, the illustrated steps are preferably continuously or periodically carried out.

*CPM structure*

According to the disclosure, the structure of the CPMs is modified to comprise items of information describing predicted behaviors, for example defining links between perceived objects and one or more situations.

**Figure 5** illustrates an example of a structure of a collective perception message (for example CPM 130 in Figure 1), according to some embodiments of the present disclosure.

For the sake of illustration, the illustrated CPM structure is based on ETSI TS 103 324 specification (V0.0.29 of May 2022). As illustrated, it comprises an ITS PDU header referenced 500, a CPM reference time field referenced 505, a "CPM Parameters" field 510, and a "Certificate" 515.

ITS PDU header 500 is a common header that includes the information of the protocol version, the message type, and the ITS-S identifier (ID) of the originating ITS-S.

CPM reference time field 505 (denoted *cpmReferenceTime*) is the absolute reference time of the message.

"CPM Parameters" field 510 contains a management container referenced 520, an optional station data container referenced 530, a perception data container referenced 540 containing an optional set of sensor information containers referenced 550, an optional set of perceived object containers referenced 560, and an optional set of free space addendum Containers referenced 570.

Each container includes some data elements (DE) and/or data frames (DF). ETSI TS 102 894-2 specification defines conventional data elements and data frames used in ITS messages.

Regardless of the type of the ITS-S generating the considered CPM, the management container provides information regarding the station type and the reference position of the originating ITS station. The message can be transmitted either by an ITS station, such as a vehicle, or by a stationary RSU. In case of a CPM generated by a vehicle, the station data container contains the dynamic information of the originating ITS station. It is not optional in case of a vehicle transmitting the CPM. In case of a CPM generated by an RSU, the station data container may provide references to identification numbers provided by the MAP Message (CEN ISO/TS 19091) reported by the same RSU. These references are required in order to match data provided by the CPM to the geometry of an intersection or road segment as provided by the MAP message. It is not required that a RSU has to transmit a MAP message for matching objects to road geometries. In this case, the station data container may be omitted. It is for this reason that the station data container is set as optional.

The sensor information container 550, that is optional, contains the set of sensor information. It provides information about the sensory capabilities of an ITS station. Depending on the station type of the originating ITS station, different sensor information specifications are available to encode the properties of a sensor. The sensor information container is attached to CPMs at a lower frequency than the other containers, as defined in ETSI TR 103 562 specification. Up to 128 sensor information may be used in a CPM.

The perceived object container 560, that is optional, contained a set of perceived objects 561. It is composed of a sequence of optional or mandatory data elements (DEs) and/or data frames (DFs) which give a detailed description of the dynamic state and properties of a detected (or perceived) object.

More precisely, each object has to be described using the dedicated *perceivedObject* structure referenced 561. The first part of this structure (referenced 562) contains data elements and/or data frames, for example as defined in ETSI TS 103 324 specification (V0.0.29 of May 2022), and comprises various fields including the following:

- *objectID,* which is a data element being an identifier assigned to a perceived object. It remains constant as long as the object is perceived by the originating ITS-S,
- *timeOfMeasurement*, which is a data element corresponding to the time difference for the provided measurement information with respect to the CPM reference time 505,
- the distance defined by *xDistance, yDistance,* and *zDistance* (optional), which corresponds to the distance between the perceived object and the ITS-S's reference point the in *x, y, z-direction* of the ITS-S coordinate system, respectively, for the time of measurement,
- the speed defined by *xSpeed, ySpeed* and *zSpeed* (optional), which corresponds to the speed of the perceived object in the detecting ITS-S's reference system in the *x, y, z-direction,* respectively, for the time of measurement,
- the acceleration (optional) defined by *xAcceleration, yAcceleration,* and *zAcceleration,* which corresponds to the acceleration of the perceived object from the ITS-S's reference point in the *x, y, z-direction,* respectively, for the time of measurement,
- the dimension (optional) defined by *planarObjectDimension1, planarObjectDimension2,* and *verticalObjectDimension,* which represents the dimension of the perceived object,
- *objectRefPoint,* which is a reference point of the detected object. By default, the reference point is the center point of the perceived object,
- *objectAge,* which is the age of the perceived object,
- *objectConfidence,* which is the confidence level associated with the perceived object. The computation of the object confidence level may be based on a sensor's or merging system confidence, on the binary detection success (i.e. the detection success of the object during the last measurements), and on the object age,

- *sensorIDList* (optional), which is the list of sensor identifiers which provided the measurement data. It refers to *sensorID* in the sensor information container. If the sensor information container is never provided by the originating ITS-S, the list may be populated with random numbers, where each number is assigned to a sensor of the originating ITS-S,
- *dynamicStatus* (optional), which is a dynamic Status providing the capabilities of the originating ITS-S to move away from the perceived object (for example, it may take one of the values *dynamic, hasBeenDynamic,* or *static*),
- *classification* (optional), that provides the classification of the perceived object. It is composed of an object class and possibly a subclass (e.g., vehicle class has subclasses passengerCar, bus, etc.) with a class confidence value, and
- *matchedPosition*, (optional), that indicates the position of the perceived object mapped onto the intersection topology description transmitted in MAP messages.

Free space addendum container 570 is optional. It contains the set of free space addendum information. It comprises a sequence of optional or mandatory data elements (DEs) which provide information about free spaces detected by a particular sensor. Each free space addendum comprises various fields such as:

- *freeSpaceConfidence*, which is the free space confidence value that applies to the entire area,
- *freeSpaceArea*, which is the geometry of the free space area,
- *sensorIDList*, which is a list of identifiers of the sensors which performed the measurement to indicate the free space, and
- *shadowingApplies*, which is a Boolean indicator used to indicate whether a tracing approach should be used to compute a shadowed area behind an object.

It is noted that collective perception messages as described in TS 103 324 draft V0.0.29 with the items of information contained in data structure 562 for *perceivedObject* enables reporting of the current state of an object.

The items of information contained in the data structure 563 is a prediction container that enables reporting information related to the future state of an object.

The prediction container data structure 563 may comprise various fields such as:

- *DeltaTime,* which represents the time difference between each pair of consecutive points in a predicted path (e.g., a predicted path may contain points spaced by 100 ms),
- list of *PredictedPath,* which contains one or several predicted paths for the considered object. The number of paths can be up to 3 for instance. Each predicted path may contain:

  ○ *PathProbability,* which represents the probability that an event leading to the predicted path occurs,
  ○ list of *PathPoints,* which lists the points of a predicted path (e.g., the number of points of a predicted path may be up to 10). Each path point may be defined by:

    ▪ *XDistanceOffset, YDistanceOffset,* which represent the distances measured from the CPM reference point in the x- and y- directions of the ITS-S coordinate system, respectively, and
    ▪ optional covariance information for each point that can be included within *XConfidence, YConfidence* and *Correlation.*

Other organizations of the data structure may be envisioned, such as having the *DeltaTime* for each path point or as adding a unique identifier within a CPM *predictedPathID* to track the prediction evolution in successive CPM.

According to some embodiments of the disclosure, additional items of information may be included in the data structure 563 for each predicted path, such as:

- *PathDangerousness,* which represents a level of dangerousness of the predicted path,
- *PathPredictability,* which represents a level of difficulty to predict the path without any advanced prediction algorithm or local knowledge,
- *PredictionSendingReason,* which represents an added value of the prediction, which may comprise a reason for sending the prediction paths in the CPM,
- *PredictedSituationType,* which is a type of the situation associated with the predicted path,
- *PredictedPathID,* which is an identifier of the predicted path, and
- *LinkedPredictedPathIDList,* which makes it possible to associate a predicted path with another object predicted path or several objects predicted paths to reflect the possible interactions between object predictions. To that end, this field may contain a list of PredictedPathID. The relationship type may also be reflected by adding a link type information (e.g., "parent").

**Figure 6** illustrates an example of a Service Specific Permission (SSP) item which may be specified in a certificate of a CPM according to some embodiments of the present disclosure.

Back to Figure 5, certificate 515 is attached to CPM 130 to certify the authenticity of the originating ITS-S (e.g., R-ITS-S 112 in Figure 1) and its permission to provide ITS messages and some items of information they comprise. The permissions are defined in a so-called service specific permission (SSP) item within the certificate.

In order to secure V2X communications within the ITS, a public-key-infrastructure (PKI), for example as defined in version 1.1.1 of the ETSI TS 102 731 specification, may be used, in particular to verify the integrity of a message and to authenticate an originating ITS-S. The PKI-based security may be implemented through the use of certificates delivered by a certification authority to the ITS stations.

Therefore, each ITS message exchanged is made of a non-encrypted message, CPM parameter 510, accompanied with a digital signature and a pseudonym certificate (also referred to as an authorization ticket) that validates the authenticity of the originating ITS-S and the integrity of the message, while keeping anonymity of the originating ITS-S. For communicating within the ITS, an ITS-S may comprise one or more authorization tickets, and may use an authorization ticket for communicating.

Information about the prediction, provided for example in the data structure 563 of CPM 130 in Figure 5, should preferably, for security reasons, come from a station considered as secure.

The authorization ticket may therefore comprise indications related to the privileges and authorizations of an originating ITS-S to transmit specific ITS messages, for example CPM 130 comprising data structure 563.

To that end, an authorization ticket may contain a field called ITS AID, which includes the list of the services that the station is authorized to access and use, for example as specified in ETSI TR 102 965 specification. In particular, a specific service is dedicated to collective perception service, to indicate that the sender is entitled to send CPMs. The authorization ticket also contains a field called ITS AID service specific permissions (SSP), which indicates specific sets of permission within the overall permission indicated by the ITS-AID. Its format may be the one specified in ETSI TS 103 097 specification.

According to some embodiments of the present disclosure, a SSP is provided, that may be specified in the certificate of CPMs containing a data structure 563, as described hereinbefore. An example of such a SSP is illustrated in Figure 6.

As illustrated, SSP 600 comprises three bytes referenced 610, 620, and 630. According to this example, the first byte (byte 610) gives a version of the SSP and the second and third bytes (bytes 620 and 630) define specific permission.

Still according to the illustrated example, specific permission 640 are defined using the first, second, third, and fourth bits of the second byte (byte 620) as follows:

- the first bit is set to 1 for indicating permission for reporting a prediction information (such as data element 563) in the payload of the CPM, otherwise it is set to 0,
- the second bit is set to 1 for indicating permission for reporting a prediction information using local knowledge algorithms (corresponding to PredictionSendingReason main code 1) in the payload of the CPM, otherwise it is set to 0,
- the third bit is set to 1 for indicating permission for reporting a prediction information using VRU attitude algorithms (corresponding to PredictionSendingReason main code 2) in the payload of the CPM, otherwise it is set to 0, and
- the fourth bit is set to 1 for indicating a permission for reporting a prediction information using object state algorithms (corresponding to PredictionSendingReason main code 3) in the payload of the CPM, otherwise it is set to 0.

Of course, other positions and/or values may be contemplated.

With such permission, an originating ITS-S is allowed to include prediction information in the CPMs it generates and the receiving ITS-Ss can trust that this originating ITS-S is entrusted to transmit such prediction information.

According to some embodiments of the present disclosure, such an SSP may be provided in authorization tickets dedicated to an RSU, which are less likely to be hacked. Of course, according to some embodiments of the present disclosure, such an SSP may be provided within authorization tickets to any type of ITS-S.

*Example of a use case*

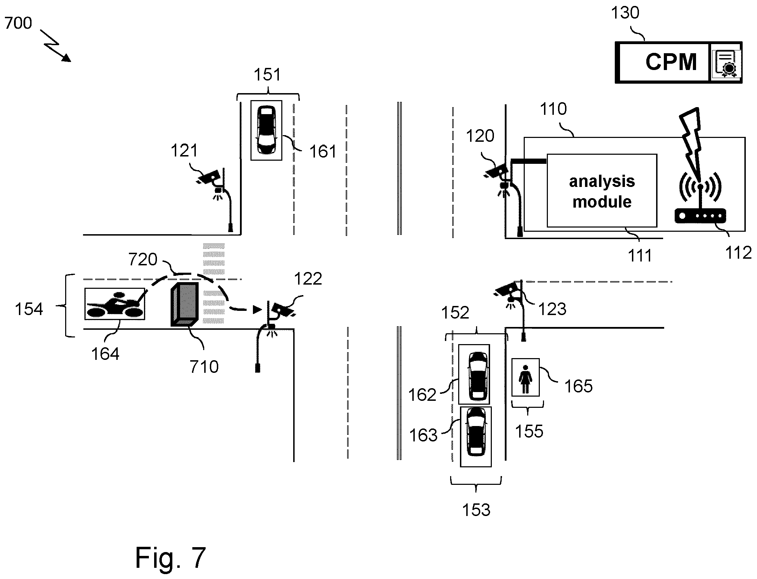

**Figure 7** illustrates a use case of embodiments of the present disclosure, where a dangerous trajectory is predicted for a motorbike on the roadway monitored by the ITS.

For the sake of clarity and conciseness, the intelligent transportation systems illustrated in Figure 7 and referenced 700, is the same or is similar to the one illustrated in Figure 1, a main difference between Figure 1 and Figure 7 being the presence of an obstacle 710 (such as a speed bump) on the path of the motorbike 164 on a portion of the roadway monitored by RSU 110.

Like RSU 110 in Figure 1, the RSU comprising the originating ITS station illustrated in Figure 7, also referenced 110, sending CPM 130, comprises more processing resources to analyze situations than ITS-Ss of moving vehicles (e.g., a wider field of view, multiple fields of view, fast access to other information, knowledge of objects that populate the monitored area, etc.).

Again, ITS 700 is implemented at an intersection and comprises a stationary road side unit 110 and several entities that may carry or comprise ITS stations (ITS-Ss) each, for transmitting and/or receiving ITS messages within the ITS. The several entities may be, for example, the vehicles 151, 152, and 153, the motorbike 154, and the pedestrian 155. Likewise, stationary road side unit 110 comprises a set of sensors, such as image sensors, here video cameras 120, 121, 122, and 123, and analysis module 111 to analyze data provided by the sensors.

By scanning the monitored area, analysis module 111 may perceive the following objects:

- objects 161, 162, and 163, respectively corresponding to the vehicles 151, 152, and 153 on the roadway,
- object 164 corresponding to motorbike 154 on the roadway, and
- object 165 corresponding to pedestrian 155 on the sidewalk.

In the illustrated example, motorbike 154 is likely to bypass obstacle 710 by the left, driving in the middle of the road, creating a potentially dangerous situation for the vehicle 151 if it turns to its right.

To cope with this situation, the prediction module of analysis module 111 (e.g., prediction module 240 in Figure 2) is able to predict path 720 with a certain path probability based on the learnt trajectories for motorbikes in the monitored area, and using the ITS generation module of the ITS-S (e.g., ITS generation module 260 in Figure 2) to generate CPMs with the predictedPath 720 for object 164 (i.e., perceivedObject 164).

The generated CPMs may have the CPM format described by reference to Figure 5, that contains additional items of information for the predictedPath 720. Based on some of the embodiments described above, such additional items of information may be the following:

*PathDangerousness* = 80
*PathPredictability* = 80

*PredictionSendingReason* = Local knowledge (code 1) / Trajectory cluster (sub-code 1)

*PredictedSituationType* = Obstacle bypassing (code 4)

Upon reception of such a CPM, the receiving ITS-S of vehicle 151 analyses the received CPM. In a first step, the receiving ITS-S of vehicle 151 associates *perceivedObject* 164 with a corresponding object of its local environment model or create a new object if it is not yet known. When analyzing the predicted path 720 for the perceived object 164, it may trust this prediction and be very cautious before turning to the right as there is a risk of having the motorbike in the middle of the road (which is dangerous).

*Example of hardware to carry out steps of the method of embodiments of the present disclosure*

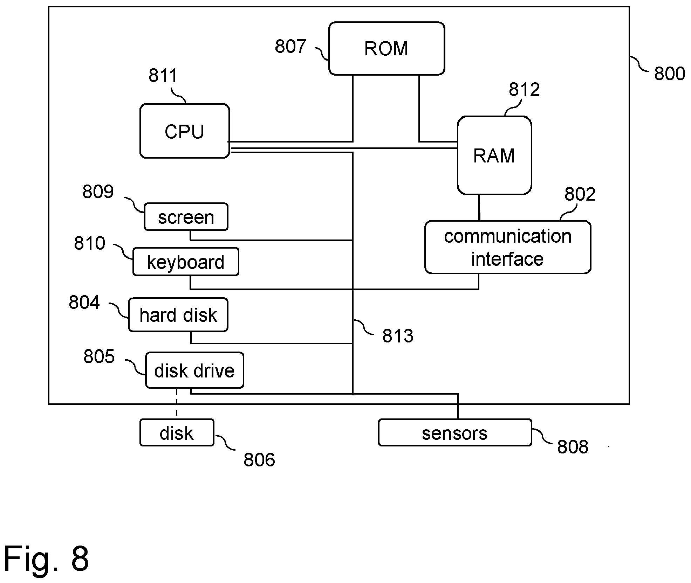

**Figure 8** is a schematic representation of an example of a communication device configured to implement some embodiments of the present disclosure, in whole or in part. It may be either an ITS-S embedded in a vehicle or in a road side unit, for example road side unit 110 in Figure 1 or in Figure 7.

The communication device 800 may preferably be a device such as a microcomputer, a workstation, or a light portable device embedded in a vehicle or a RSU. As illustrated, communication device 800 comprises a communication bus 813 to which there are preferably connected:

- a central processing unit 811, such as a microprocessor, denoted CPU or a GPU (for graphical processing unit),
- a read-only memory 807, denoted ROM, for storing computer programs for implementing the disclosure, in whole or in part,
- a random access memory 812, denoted RAM, for storing the executable code of methods according to embodiments of the disclosure as well as the registers adapted to record variables and parameters necessary for implementing methods according to embodiments of the disclosure, and

- at least one communication interface 802 connected to the radio communication network over which ITS messages are transmitted. The ITS messages may be written from a FIFO sending memory of RAM 812 to the network interface for transmission or may be read from the network interface for reception and written into a FIFO receiving memory of RAM 812 under the control of a software application running in the CPU 811.

Optionally, the communication device 800 may also include one or several of the following components:

- a data storage means 804 such as a hard disk, for storing computer programs for implementing methods according to one or more embodiments of the disclosure,
- a disk drive 805 for a disk 806, the disk drive being adapted to read data from the disk 806 or to write data onto this disk, and
- a screen 809 for serving as a graphical interface with a user, by means of a keyboard 810 or any other pointing means.

The communication device 800 may be optionally connected to various peripherals including perception sensors 808, such as digital cameras, each being connected to an input/output card (not shown) so as to supply data to the communication device 800.

Preferably the communication bus provides communication and interoperability between the various elements included in the communication device 800 or connected to it. The representation of the bus is not limiting and in particular the central processing unit is operable to communicate instructions to any element of the communication device 800 directly or by means of another element of the communication device 800.

The disk 806 may optionally be replaced by any information medium such as for example a compact disk (CD-ROM), rewritable or not, a ZIP disk, a USB key or a memory card and, in general terms, by an information storage means that can be read by a microcomputer or by a microprocessor, integrated or not into the apparatus, possibly removable and adapted to store one or more programs whose execution enables a method according to the invention to be implemented.

The executable code may optionally be stored either in read-only memory 807, on the hard disk 804 or on a removable digital medium such as for example a disk 806 as described previously. According to an optional variant, the executable code of the programs can be received by means of the communication network, via the interface 802, in order to be stored in one of the storage means of the communication device 800, such as the hard disk 804, before being executed.

The central processing unit 811 is preferably adapted to control and direct the execution of the instructions or portions of software code of the program or programs according to the invention, which instructions are stored in one of the aforementioned storage means. On powering up, the program or programs that are stored in a nonvolatile memory, for example on the hard disk 804 or in the read-only memory 807, are transferred into the random access memory 812, which then contains the executable code of the program or programs, as well as registers for storing the variables and parameters necessary for implementing the invention.

In a preferred embodiment, the apparatus is a programmable apparatus which uses software to implement the invention. However, alternatively, the present invention may be implemented in hardware (for example, in the form of an Application Specific Integrated Circuit or ASIC).

Although the present invention has been described herein above with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular, the different features from different embodiments may be interchanged, where appropriate.

Certain of the embodiments of the invention described above may be implemented solely or as a combination of elements of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

**Claims**

1.  A method of communication in an intelligent transport system, ITS, comprising, at an originating ITS station, ITS-S, monitoring an area:

    transmitting a Collective Perception Message, CPM, comprising predicted data representing a predicted behavior of an object perceived by the originating ITS-S within the monitored area, the CPM further comprising an item of information characterizing the predicted behavior with regard to at least one element of the monitored area.

2.  The method of claim 1, wherein the at least one element is different from the perceived object.

3.  The method of claim 1 or claim 2, wherein the predicted behavior comprises a predicted position or a predicted trajectory including a set of consecutive predicted positions.

4.  The method of any one of claims 1 to 3, wherein the item of information characterizing the predicted behavior comprises a danger level associated with an occurrence of the predicted behavior.

5.  The method of any one of claims 1 to 4, wherein the item of information characterizing the predicted behavior comprises a difficulty level representing a difficulty for predicting the behavior of the perceived object.

6.  The method of any one of claims 1 to 5, wherein the item of information characterizing the predicted behavior comprises an indication of an existing or a predicted situation causing a possible occurrence of the predicted behavior.

7.  The method of any one of claims 1 to 6, further comprising determining the predicted behavior.

8.  The method of claim 7, wherein determining the predicted behavior comprises accessing knowledge associated with elements of the area.

9.  The method of claim 8, wherein the knowledge associated with elements of the area comprises observed past trajectories, vehicle timetables, school timetables, and/or local events.

10. The method of claim 7, further comprising determining a state of the perceived object, wherein determining the predicted behavior is carried out as a function of the state of the perceived object, the item of information characterizing the predicted behavior comprising an indication of the state of the perceived object.

11. The method of claim 7, further comprising determining an attitude of the perceived object, wherein determining the predicted behavior is carried out as a function of the attitude of the perceived object, the item of information characterizing the predicted behavior comprising an indication of the attitude of the perceived object.

12. A method of communication in an intelligent transport system, ITS, comprising, at a receiving ITS station, ITS-S:

    receiving a Collective Perception Message, CPM, from an originating ITS-S, the received CPM comprising predicted data representing a predicted behavior of an object perceived by the originating ITS-S within a monitored area, the CPM further comprising an item of information characterizing the predicted behavior with regard to at least one element of the monitored area, and
    analyzing the received predicted behavior and the item of information characterizing the received predicted behavior to determine whether the received predicted behavior is to be considered.

13. The method of claim 12, wherein the at least one element is different from the perceived object.

14. The method of claim 12 or claim 13, further comprising determining a predicted behavior of the perceived object, the determined predicted behavior or the received predicted behavior being considered as a result of the analyzing.

15. The method of any one of claims 12 to 14, wherein the item of information characterizing the predicted behavior comprises a danger level associated with an occurrence of the predicted behavior.

16. The method of any one of claims 12 to 15, wherein the item of information characterizing the predicted behavior comprises a difficulty level representing a difficulty for predicting the behavior of the perceived object.

17. The method of any one of claims 12 to 16, wherein the item of information characterizing the predicted behavior comprises an indication of an existing or a predicted situation causing a possible occurrence of the predicted behavior.

18. The method of any one of claims 12 to 17, wherein the item of information characterizing the predicted behavior comprises a state or an attitude of the perceived object.

19. A computer program product for a programmable apparatus, the computer program product comprising a sequence of instructions for implementing each of the steps of the method according to any one of claims 1 to 18 when loaded into and executed by the programmable apparatus.

20. A non-transitory computer-readable storage medium storing instructions of a computer program for implementing each of the steps of the method according to any one of claims 1 to 18.

21. An Intelligent Transport System, ITS, station, ITS-S, comprising a processing unit configured for carrying out each of the steps of the method according to any one of claims 1 to 18.

22. A Collective Perception Message, CPM, to transmit information in an Intelligent Transport System, ITS, comprising predicted data representing a predicted behavior of an object perceived within a monitored area, the CPM further comprising an item of information characterizing the predicted behavior with regard to at least one element of the monitored area.

Fig. 1

Fig. 2

300 — monitoring an area using sensors

310 — updating the environment model with perceived object attributes

320 — updating the environment model with information related to prediction of perceived object future state

330 — sending a CPM with object and prediction information

Fig. 3

400 — receiving a CPM with object and prediction information

410 — updating the environment model

Fig. 4

130

500 — ITS PDU Header
505 — cpmReferenceTime
510 — CPM Parameters
515 — Certificate

540 — Perception Data Container
570 — Free Space Addendum Container (optional)

520 — Management Container
530 — Station Data Container (Optional)
- Originating Vehicle ITS-S Container
- or
- Originating Roadside ITS-S Container

550 — SensorInformation Container (optional)
560 — Perceived Object Container (optional)

561 — Perceived Object (0..255)
562 — objectID ....
563 — Prediction Container
- DeltaTime
- List of PredictedPath
- PathProbability
- List of PathPoints
- PathDangerousness
- PathPredictability
- PredictionSendingReason
- PredictedSituationType
- PredictedPathID
- LinkedPredictedPathIDList

Fig. 5

600

610    620    630

| byte 0 | byte 1 | byte 2 |

640

| Byte | Bit position | Permission item | Bit value |
|------|--------------|-----------------|-----------|
| 1 | 0 | Prediction Information | 0 : certificate not allowed to sign<br>1 : certificate allowed to sign |
| 1 | 1 | Local Knowledge Prediction | 0 : certificate not allowed to sign<br>1 : certificate allowed to sign |
| 1 | 2 | VRU Attitude Prediction | 0 : certificate not allowed to sign<br>1 : certificate allowed to sign |
| 1 | 3 | Object State Prediction | 0 : certificate not allowed to sign<br>1 : certificate allowed to sign |

Fig. 6

Fig. 7

Fig. 8

Europäisches
Patentamt

European
Patent Office

Office européen
des brevets

**EUROPEAN SEARCH REPORT**

Application Number

EP 23 18 1342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STROHBECK JAN ET AL: "An Extension Proposal for the Collective Perception Service to Avoid Transformation Errors and Include Object Predictions*", 2021 IEEE VEHICULAR NETWORKING CONFERENCE (VNC), IEEE, 10 November 2021 (2021-11-10), pages 40-43, XP034052892, DOI: 10.1109/VNC52810.2021.9644655 [retrieved on 2021-12-08] * page 41, left-hand column * * figure 2 * ----- | 1-22 | INV. G08G1/01 G08G1/16 |
| X | III ET AL: "Recommend use case updates for TR 103 300-1 (revision 2)", ETSI DRAFT; ITSWG1(22)058015, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. WG ITS WG1 Application Requirements and Services 10 March 2022 (2022-03-10), pages 1-4, XP014423514, Retrieved from the Internet: URL:ftp://docbox.etsi.org/ITS/ITSWG1/05-CONTRIBUTIONS/2022/ITSWG1(22)058015_Recommend_use_case_updates_for_TR_103_300-1.docx [retrieved on 2022-03-10] * paragraph [6.5.4.1] * * paragraph [6.5.4.2] * * paragraph [6.5.4.8.1] * ----- -/-- | 1-22 | |

TECHNICAL FIELDS
SEARCHED (IPC)

G08G

The present search report has been drawn up for all claims

| Place of search | Date of completion of the search | Examiner |
|---|---|---|
| The Hague | 16 November 2023 | de la Cruz Valera, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

**EP 23 18 1342**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VICI: "Intelligent Transport Systems (ITS); Vulnerable Road Users (VRU) awareness; Part 1: Use Cases definition; Release 2", ETSI TR 103 300-1 V2.2.1 (20, 1 April 2021 (2021-04-01), pages 1-76, XP055940325, Retrieved from the Internet: URL:https://www.etsi.org/deliver/etsi_tr/1 03300_103399/10330001/02.02.01_60/tr_10330 001v020201p.pdf [retrieved on 2022-07-08] * paragraph [6.5.4.5] * * paragraph [6.7.1.4] * * paragraph [07.2] * * paragraph [07.9] * * paragraph [6.3.2.4] * * paragraph [6.5.4.4] * * paragraph [4.5.2.1] * ----- | 1-22 | |
| | -/-- | | TECHNICAL FIELDS SEARCHED (IPC) |

The present search report has been drawn up for all claims

| Place of search | Date of completion of the search | Examiner |
|---|---|---|
| The Hague | 16 November 2023 | de la Cruz Valera, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches
Patentamt

European
Patent Office

Office européen
des brevets

**EUROPEAN SEARCH REPORT**

Application Number

EP 23 18 1342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VICI: "Draft – RTR/ITS-00161 v0.0.6 (TR 102 638 ) BSA Release 2 revision", ETSI DRAFT; ITSWG1(22)059003, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. WG ITS WG1 Application Requirements and Services, no. .0.6 11 March 2022 (2022-03-11), pages 1-77, XP014426853, Retrieved from the Internet: URL:ftp://docbox.etsi.org/ITS/ITSWG1/05-CO NTRIBUTIONS/2022/ITSWG1(22)059003_Draft_-_ RTR_ITS-00161__v0_0_6__TR_102_638____BSA_R elease_2_r.zip ITS-00161v006.docx [retrieved on 2022-03-11] * paragraph [5.3.4] * * paragraph [5.9.3] * * paragraph [5.11.2.3] * * paragraph [5.11.2.7] * ----- | 1-22 | |
| A | US 2020/219386 A1 (EL ASSAAD AHMAD [DE]) 9 July 2020 (2020-07-09) * paragraphs [0013] – [0016] * * paragraph [0063] * * paragraph [0076] * ----- | 1-22 | TECHNICAL FIELDS SEARCHED (IPC) |

The present search report has been drawn up for all claims

| Place of search | Date of completion of the search | Examiner |
|---|---|---|
| The Hague | 16 November 2023 | de la Cruz Valera, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 1342

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2023

| Patent document cited in search report | | Publication date | Patent family member(s) | | Publication date |
|---|---|---|---|---|---|
| US 2020219386 A1 | | 09-07-2020 | CN | 111432372 A | 17-07-2020 |
| | | | EP | 3681180 A1 | 15-07-2020 |
| | | | EP | 3681181 A1 | 15-07-2020 |
| | | | JP | 7021266 B2 | 16-02-2022 |
| | | | JP | 2020113272 A | 27-07-2020 |
| | | | KR | 20200086640 A | 17-07-2020 |
| | | | US | 2020219386 A1 | 09-07-2020 |

For more details about this annex : see Official Journal of the European Patent Office, No. 12/82

**EP 4 300 459 A1**

**Non-patent literature cited in the description**

- *ETSI TS 103 324,* May 2022
- *EN 302 637-2,* April 2019
- *EN 302 637-3,* April 2019

- *ETSI TS 103 324 specification,* May 2022